# EUROPÄISCHE PATENTANMELDUNG

(11) **EP 1 070 948 A1**
(43) Veröffentlichungstag der Anmeldung: **24.01.2001**
(21) Anmeldenummer: 99114055.9
(22) Anmeldetag: 20.07.1999
(51) Int. Cl.: G01L 19/06

(54) **Relativdrucksensor**

(71) Anmelder: ENDRESS + HAUSER GMBH + CO., D-79689 Maulburg (DE)
(72) Erfinder: Bernauer, Andreas, Dipl.-Ing., 79650 Schopfheim (DE)
(74) Vertreter: Andres, Angelika

(57) **Zusammenfassung**

Es ist ein gegenüber Feuchtigkeit geschützter Relativdrucksensor vorgesehen, mit einem Gehäuse (17), einer in dem Gehäuse (17) angeordneten Meßkammer (5), die mit einer druckempfindlichen Meßmembran (3) verschlossen ist, auf deren Außenseite im Betrieb ein zu messender Druck (P) einwirkt, auf deren Innenseite im Betrieb ein Referenzdruck (R) einwirkt, und einem Wandler zur Umwandlung einer druckabhängigen Auslenkung der Meßmembran (3) in eine elektrische Meßgröße, bei dem die Meßkammer (5) über eine Referenzdruckzuleitung (37) mit einem Innenraum des Gehäuses (17) verbunden ist und bei dem in der Referenzdruckzuleitung (37) ein hydrophiler Einsatz (39) vorgesehen ist.

## Beschreibung

Die Erfindung betrifft einen Relativdrucksensor.

In der Druckmeßtechnik wird zwischen Differenz-, Absolut- und Relativdrucksensoren unterschieden.
Differenzdrucksensoren dienen der Messung der Differenz zwischen zwei verschiedenen Drücken. Bei Absolutdrucksensoren wird ein zu messender Druck absolut, d.h. als Druckunterschied gegenüber einem Vakuum erfaßt. Mit einem Relativdrucksensor wird ein zu messender Druck in Form eines Druckunterschiedes gegenüber einem Referenzdruck aufgenommen. Der Referenzdruck ist ein Umgebungsdruck der dort herrscht, wo sich der Sensor befindet. Bei den meisten Anwendungen ist dies der Atmosphärendruck am Einsatzort. Wird der Sensor jedoch z.B. in einem unter Über- oder Unterdruck stehenden Raum eingesetzt, so ist der Referenzdruck der Rauminnendruck.

Relativdrucksensoren weisen üblicherweise eine Meßkammer auf, die mit einer druckempfindlichen Meßmembran verschlossen ist. Auf eine Außenseite der Meßmembran wirkt im Betrieb der zu messende Druck ein. Auf einer meßmembran-abgewandten Seite weist die Meßkammer eine Öffnung auf, durch die der Referenzdruck im Inneren der Meßkammer an der Meßmembran anliegt. Es ist ein Wandler vorgesehen, der eine vom Relativdruck abhängige Auslenkung der Meßmembran in eine elektrische Meßgröße umwandelt.

Ein Nachteil solcher Sensoren besteht darin, daß durch die der Zufuhr des Referenzdrucks dienende Öffnung Feuchtigkeit in die Meßkammer gelangen kann, die die Meßgenauigkeit beeinträchtigt. Ist die Temperatur in der Umgebung höher als die Temperatur im Inneren der Meßkammer, so kann im Inneren der Meßkammer der Taupunkt unterschritten werden und es bildet sich Kondensat.

Elektromechanische Wandler, wie sie zur Erfassung der Auslenkung der Meßmembran erforderlich sind, sind in der Regel sehr empfindlich gegenüber Feuchtigkeit.

In der Europäischen Patentanmeldung mit der Anmeldenummer 98 11 35 87 ist ein Relativdrucksensor beschrieben mit
- einem Gehäuse,
- einer in dem Gehäuse angeordneten Meßkammer,
   -- die mit einer druckempfindlichen Meßmembran verschlossen ist,
      --- auf deren Außenseite im Betrieb ein zu messender Druck einwirkt und
      --- auf deren Innenseite im Betrieb ein Referenzdruck einwirkt, und
- einem Wandler zur Umwandlung einer druckabhängigen Auslenkung der Meßmembran in eine elektrische Meßgröße,
- bei dem die Meßkammer über eine Referenzdruckzuleitung mit einem Innenraum des Gehäuses verbunden ist.

In einer Wand des Gehäuses ist eine Bohrung vorgesehen durch die ein Druckausgleich zwischen dem Innenraum des Gehäuses und der Umgebungerfolgt. Im Innenraum des Gehäuses herrscht somit der Referenzdruck. Die Bohrung ist durch einen offenporigen gut wärmeleitenden hydrophoben Filter verschlossen.

Der Filter bewirkt, daß keine verunreinigenden Partikel in das Gehäuse hineingelangen, daß Spritz- und/oder Kondenswasser abgewiesen wird und Wassertröpfchen nicht in den Innenraum gelangen können.

Ein solcher Filter schützt zwar den Innenraum vor Feuchtigkeit, er kann jedoch ein Eindringen von Feuchtigkeit nicht vollständig verhindern. So kann z.B. wenn der Relativdrucksensor einer warmen Umgebung mit hoher Luftfeuchtigkeit ausgesetzt ist feuchte Luft in das Gehäuse hinein gelangen. Bei einer späteren Abkühlung verbleibt eine Restfeuchtigkeit im Gehäuse.

Es ist eine Aufgabe der Erfindung, einen Relativdrucksensor anzugeben, der gegenüber Feuchtigkeit geschützt ist.

Hierzu besteht die Erfindung in einem Relativdrucksensor mit
- einem Gehäuse,
- einer in dem Gehäuse angeordneten Meßkammer,
   -- die mit einer druckempfindlichen Meßmembran verschlossen ist,
      --- auf deren Außenseite im Betrieb ein zu messender Druck einwirkt und
      --- auf deren Innenseite im Betrieb ein Referenzdruck einwirkt, und
- einem Wandler zur Umwandlung einer druckabhängigen Auslenkung der Meßmembran in eine elektrische Meßgröße,
- bei dem die Meßkammer über eine Referenzdruckzuleitung mit einem Innenraum des Gehäuses verbunden ist und
- bei dem in der Referenzdruckzuleitung ein hydrophiler Einsatz vorgesehen ist.

Gemäß einer Ausgestaltung der Erfindung ist der Einsatz auswechselbar.

Gemäß einer Weiterbildung ist erkennbar, wieviel Feuchtigkeit sich in dem Einsatz befindet.

Gemäß einer Ausgestaltung besteht der Einsatz aus einem Material, dessen Farbe von der darin aufgenommenen Feuchtigkeit abhängt.

Gemäß einer Weiterbildung weist das Gehäuse ein Fenster auf, durch welches der Einsatz von außen sichtbar ist.

Die Erfindung und weitere Vorteile werden nun anhand der Figuren der Zeichnung, in der ein Ausführungsbeispiel dargestellt ist, näher erläutert; gleiche Elemente sind in den Figuren mit gleichen Bezugszeichen versehen.
- Fig. 1: zeigt einen Schnitt durch einen Relativdrucksensor und
- Fig. 2: zeigt eine Ansicht desselben.

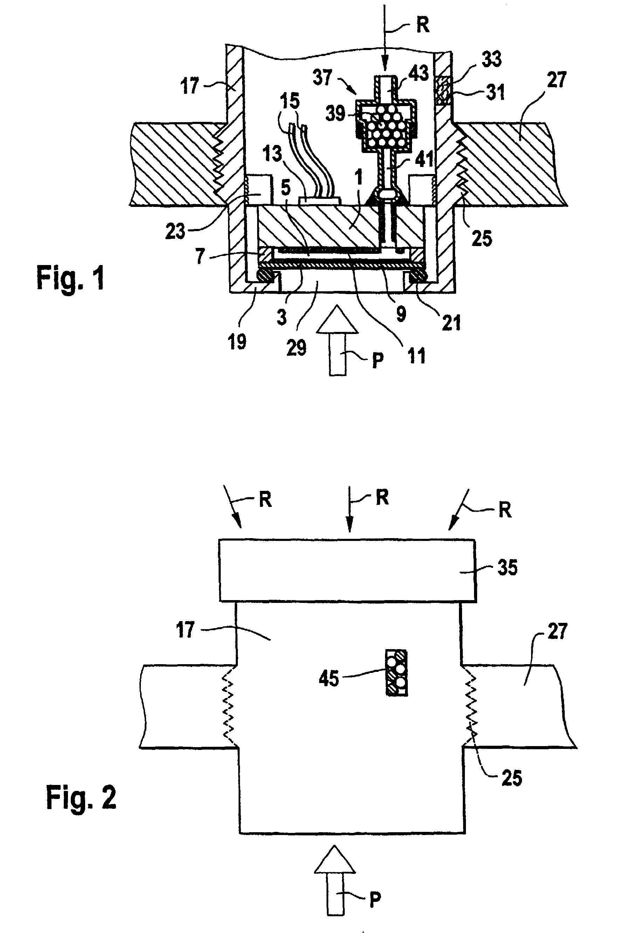

In Fig. 1 ist ein Schnitt durch einen erfindungsgemäßen Relativdrucksensor dargestellt. Das Herzstück des Relativdrucksensors ist in dem gezeigten Ausführungsbeispiel eine kapazitive keramische Druckmeßzelle. Diese weist einen Grundkörper 1 und eine Meßmembran 3 auf. Der Grundkörper 1 besteht z.B. aus Keramik. Die Meßmembran 3 kann ebenfalls aus Keramik bestehen oder z.B. aus Silizium oder einem Metall. Die Meßmembran 3 und der Grundkörper 1 sind an deren Rand unter Bildung einer Meßkammer 5 mittels einer Fügestelle 7 druckdicht miteinander verbunden. Die Meßmembran 3 ist druckempfindlich, d.h. ein auf sie einwirkender Druck bewirkt eine Auslenkung der Meßmembran 3 aus deren Ruhelage, und sie verschließt die Meßkammer 5.

Auf einer Innenseite der Meßmembran 3 ist eine Elektrode 9 und auf einer gegenüberliegenden Innenseite des Grundkörpers 1 ist mindestens eine Gegenelektrode 11 angeordnet. Die Elektrode 9 der Meßmembran 3 ist durch die Fügestelle 7 hindurch elektrisch kontaktiert und außerhalb z.B. mit Masse verbunden. Die Gegenelektrode 11 des Grundkörpers 1 ist durch den Grundkörper 1 hindurch zu dessen Außenseite hin elektrisch kontaktiert und führt zu einer auf dem Grundkörper 1 angeordneten elektronischen Schaltung 13. Elektrode 9 und Gegenelektrode 11 bilden einen Kondensator und die elektronische Schaltung 13 formt die Kapazitätsänderungen des Kondensators z.B. in eine sich entsprechend ändernden elektrische Spannung um.

Im Betrieb wirkt auf eine Außenseite der Meßmembran 3 ein zu messender Druck P ein. Dies ist in Fig. 1 durch einen Pfeil symbolisch dargestellt. Der Druck P bewirkt eine druckabhängige Auslenkung der Meßmembran 3 die von einem Wandler in eine elektrische Meßgröße umgewandelt wird. Bei dem beschriebenen Ausführungsbeispiel umfaßt der Wandler die Elektrode 9, die Gegenelektrode 11 und die elektronische Schaltung 13. Die elektrische Meßgröße ist z.B. eine Spannung. Die Meßgröße steht über Anschlußleitungen 15 einer weiteren Verarbeitung und/oder Auswertung zur Verfügung.

Anstatt der beschriebenen kapazitiven keramischen Meßzelle kann z.B. auch eine piezoresistive oder eine piezoelektrische Meßzelle verwendet werden. Bei diesen Arten von Meßzellen weist der Wandler auf der Meßmembran aufgebrachte Dehnmeßstreifen oder ein auf der Meßmembran aufgebrachtes piezoelektrisches Element auf. Die Meßkammer kann auch bei diesen Meßzellen durch einen Grundkörper, auf dem die Meßmembran mit deren äußerem Rand befestigt wird, und die Meßmembran selber gebildet sein.

Der Relativdrucksensor weist ein Gehäuse 17 auf in das die kapazitive keramische Meßzelle eingespannt ist. Hierzu weist das Gehäuse 17 endseitig eine sich radial nach innen erstreckenden Schulter 19 auf, auf der die Meßmembran 3 mit einem äußeren druckunempfindlichen Rand unter Zwischenfügung eines O-Rings 21 aufliegt. Auf einer meßmembran-abgewandten Seite der Meßzelle ist ein Gewindering 23 in das Gehäuse 17 eingeschraubt, durch den die Meßzelle gegen den O-Ring 21 gepreßt ist. Zur Befestigung des Sensors an einem Meßort ist an dem Gehäuse 17 ein Außengewinde 25 vorgesehen. In dem gezeigten Ausführungsbeispiel ist der Relativdrucksensor in eine in Fig. 1 lediglich angedeutete Wand 27 eines Behälters eingeschraubt. Andere Arten der Befestigung sind ebenfalls einsetzbar.

Im Inneren des Behälters herrscht der zu messende Druck P der durch eine von der Schulter 19 begrenzte Öffnung 29 auf die Meßmembran 3 einwirkt. Außerhalb des Behälters herrscht der Referenzdruck R. Damit der Relativdrucksensor seine Funktion erfüllen kann, muß der Druck in einem Innenraum des Gehäuses 17 gleich dem Referenzdruck R sein. Dies wird z.B. durch eine in Fig. 1 dargestellte durchgehende Bohrung 31 erreicht, die in einem außerhalb des Behälters befindlichen Wandabschnitt des Gehäuses 17 angeordnet ist. Die Bohrung 31 ist vorzugsweise mit einem hydrophoben Filter 33, z.B. einem Filter aus Polytetraflourethylen oder aus einem Metall, verschlossen.

Wenn das Gehäuse 17, wie in Fig. 2 dargestellt, mit einem Deckel 35 verschlossen ist und der Deckel 35 lose auf dem Gehäuse 17 montiert ist, d.h. nicht druckdicht schließt, kann auf die Bohrung 31 verzichtet werden.

Im Gehäuse 17 ist eine Referenzdruckzuleitung 37 vorgesehen, über die die Meßkammer 5 mit dem Innenraum des Gehäuses 17 verbunden ist. Der Grundkörper 1 weist eine durchgehende Bohrung auf in die die Referenzdruckzuleitung 37 eingebracht ist. Folglich herrscht in der Meßkammer 5 ebenfalls der Referenzdruck R. Auf eine Innenseite der Meßmembran 3 wirkt somit der Referenzdruck R und auf deren Außenseite der zu messende Druck P ein. Die druckabhängige Auslenkung der Meßmembran 3 ist somit im Betrieb durch den momentanen Relativdruck bestimmt.

In dem gezeigten Ausführungsbeispiel besteht die Referenzdruckzuleitung 37 aus einem ersten und einem zweiten Abschnitt 41, 43. Der erste Abschnitt 41 ist ein in den Grundkörper 1 eingebrachtes Röhrchen an dessen grundkörper-abgewandten Ende sich ein Segment mit verbreitertem Querschnitt anschließt. Dieses Segment weist ein Außengewinde auf, auf das der zweite Abschnitt 43 aufgeschraubt ist. Der zweite Abschnitt 43 weist hierzu ein entsprechendes Segment mit verbreitertem Querschnitt auf. An dieses Segment schließt sich in von dem ersten Abschnitt 41 abgewandter Richtung ein endseitig offenes Röhrchen an.

In dem Bereich in dem die Referenzdruckzuleitung 37 den verbreiterten Querschnitt aufweist ist erfindungsgemäß ein hydrophiler Einsatz 39 vorgesehen. Der Einsatz 39 dient dazu Feuchtigkeit aufzunehmen, die in einem den Referenzdruck R übertragenden Medium, üblicherweise ist dies Luft, an dieser Stelle noch enthalten ist. Damit wird erreicht, daß die Feuchtigkeit an einem Ort gesammelt wird, an dem sie keinen Schaden anrichten kann. Die Meßkammer 5 ist vor Feuchtigkeit geschützt.

Da der Deckel 35 des Gehäuses 17 abnehmbar und der zweite Abschnitt 43 der Referenzdruckzuleitung 37 abschraubbar ist, kann der Einsatz 39 ausgewechselt werden. Wenn der Einsatz 39 nahezu vollgesaugt ist, also keine weitere Feuchtigkeit mehr aufnehmen kann, wird er entfernt und durch einen neuen Einsatz ersetzt, der erneut Feuchtigkeit aufnehmen kann. Mit dem alten Einsatz 39 wird auf einfache Weise sämtliche bis dahin angesammelte Feuchtigkeit entfernt. Da der Einsatz 39 hydrophil ist und somit Feuchtigkeit anzieht, ist er auch dann effektiv, wenn der Relativdrucksensor vorübergehend in einer Umgebung mit hoher Luftfeuchtigkeit, wie sie üblicherweise bei höheren Temperaturen auftritt, eingesetzt ist. Während bei herkömmlichen Sensoren bei einem späteren Abkühlen immer ein Teil der mit der Luft eingedrungenen Feuchtigkeit frei beweglich im Gehäuse 17 verbleibt, wird diese Feuchtigkeit bei dem erfindungsgemäßen Relativdrucksensor in dem hydrophilen Einsatz 39 gebunden.

Der hydrophile Einsatz 39 besteht z.B. aus einem Kieselgel oder einem Silikagel. Vorzugsweise wird ein Material verwendet, bei dem erkennbar ist wieviel Feuchtigkeit sich in dem Einsatz 39 befindet. Besonders geeignet sind z.B. Materialien, deren Farbe von der darin aufgenommenen Feuchtigkeit abhängt, z.B. sogenannte Blaugele oder Kieselgele mit Feuchtigkeitsindikatoren. Solche Kieselgele werden z.B. sowohl in Pulver- als auch in Perlenform von der Firma Merck vertrieben.

Das Gehäuse 17 weist vorzugsweise ein Fenster 45 auf, durch welches der Einsatz 39 von außen sichtbar ist. Durch das Fenster 45 ist z.B. eine Färbung des Einsatzes 39 erkennbar. Es gibt z.B. regenerierbare Alumo-Silikate zur Luft - und Gastrocknung, die sich von blau nach rosa verfärben. Die Färbung ist in Fig. 2 durch schwarze und weiße Kugeln angedeutet.

## Patentansprüche

1. Relativdrucksensor mit
- einem Gehäuse (17),
- einer in dem Gehäuse (17) angeordneten Meßkammer (5),
-- die mit einer druckempfindlichen Meßmembran (3) verschlossen ist,
--- auf deren Außenseite im Betrieb ein zu messender Druck (P) einwirkt und
--- auf deren Innenseite im Betrieb ein Referenzdruck (R) einwirkt, und
- einem Wandler zur Umwandlung einer druckabhängigen Auslenkung der Meßmembran (3) in eine elektrische Meßgröße,
- bei dem die Meßkammer (5) über eine Referenzdruckzuleitung (37) mit einem Innenraum des Gehäuses (17) verbunden ist und
- bei dem in der Referenzdruckzuleitung (37) ein hydrophiler Einsatz (39) vorgesehen ist.

2. Relativdrucksensor nach Anspruch 1, bei dem der Einsatz (39) auswechselbar ist.

3. Relativdrucksensor nach Anspruch 1, bei dem erkennbar ist wieviel Feuchtigkeit sich in dem Einsatz (39) befindet.

4. Relativdrucksensor nach Anspruch 3, bei dem der Einsatz (39) aus einem Material besteht, dessen Farbe von der darin aufgenommenen Feuchtigkeit abhängt.

5. Relativdrucksensor nach einem der vorangehenden Ansprüche, bei dem das Gehäuse (17) ein Fenster (45) aufweist, durch welches der Einsatz (39) von außen sichtbar ist.
